# EUROPEAN PATENT SPECIFICATION

(11) **EP 1 533 970 B1**
(45) Date of publication and mention of the grant of the patent: **16.08.2006**
(21) Application number: 03257388.3
(22) Date of filing: 24.11.2003
(51) Int. Cl.: H04L 29/06

(54) **Method and system for secure content delivery**
Verfahren und System zur gesicherten Inhaltsüberlieferung
Méthode et système de distribution de contenu sécurisé

(43) Date of publication of application: 25.05.2005
(73) Proprietor: Akamai Technologies, Inc., Cambridge, MA 02142 (US)
(72) Inventor: Weihl, William E., San Francisco CA 94114 (US); Ellis, Andrew B., Medford, MA 02155 (US); Kagan, Martin A., Burlingame, CA 94010 (US)
(74) Representative: Lawrence, Malcolm Graham

(56) References cited:
- CACHEFLOW: "SSL Primer" CACHEFLOW TECHNICAL NOTE, 31 October 2000 (2000-10-31), XP002278809
- SPEEDERA: "Speedera Distributed Delivery Network" TECHNICAL WHITE PAPER, [Online] 30 October 2003 (2003-10-30), XP002278810 Retrieved from the Internet: <URL:http://www.speedera.com/pdfs/Speedera _Dist_Delivery_Network_WP.pdf> [retrieved on 2004-05-03]
- "Content Delivery Services" SPEEDERA, [Online] 30 October 2003 (2003-10-30), XP002278811 Retrieved from the Internet: <URL:www.speedera.com/pdfs/Content_Deliver y_Datasheet.pdf> [retrieved on 2004-05-03]

## Description

### BACKGROUND OF THE INVENTION

### Technical Field

The present invention relates generally to techniques for secure content delivery.

### Description of the Related Art

In todays's world, more and more business transactions are moving to the Web, including e-commerce, financial services, and transactions requiring personal information. Ensuring the security of the transactions and the data is of the utmost importance to Web sites.

Secure Sockets Layer (SSL) is the industry standard for reliable encrypted and authenticated communications between clients and servers on the Internet. SSL processing, however, is extremely slow. The more transactions performed on a Web site, the slower the site becomes. Offloading SSL processing to specialized hardware (e.g., SSL accelerators) can help, but increasing infrastructure is difficult to scale and manage. In addition, more infrastructure means more security requirements, which may include both physical and operational security, such as hardened data centers and dedicated security staff. Moreover, often a site provider that uses an SSL accelerator may attempt to improve performance by turning off encryption between the device and the origin site, thus transporting secure data in an unencrypted state.

It is known in the art for content provider to outsource its content delivery requirements to a content delivery network (a "CDN"). A content delivery network is a collection of content servers and associated control mechanisms that offload work from Web site origin servers by delivering content on their behalf to end users, such as those disclosed in "SSL Primer", Cacheflow Technical Note, 31 October 2000; and "Speedera Distributed Delivery Network", Speedera Technical White Paper, 30 October 2003. A well-managed CDN achieves this goal by serving some or all of the contents of a site's Web pages, thereby reducing the customer's infrastructure costs while enhancing an end user's browsing experience from the site. In operation, the CDN uses a request routing mechanism to locate a CDN content server close to the client to serve each request directed to the CDN, where the notion of "close" is based, in part, on evaluating results of network traffic tests.

In the past, content delivery networks have been used to deliver the embedded objects in secure pages, but the pages themselves were delivered directly from the origin server, and not from the CDN. Delivering only SSL objects from the edge can improve performance of SSL objects, but it does not address the performance and scalability issues inherent in the computation-intensive SSL processing required for all SSL transactions.

It would be desirable to provide a highly secure, outsourced solution for providing reliable and secure delivery of SSL objects and pages and that addresses the performance and security needs of a Web site while reducing costs and complexity.

This object is solved by a method having the features of claim 1. Advantageous embodiments thereof are defined in the respective dependent claims.

As will be appreciated from the specific description with reference to the drawings, the invention in at least the embodiments there described provide, a secure content delivery network that can be used to deliver both SSL objects and SSL pages from the edge of the Internet.

It will further be appreciated that at least those embodiments improve Web site performance by enabling delivery of SSL objects and cacheable content from servers closer to requesting end users, thereby avoiding congestion on the Internet.

It will be further appreciated that at least those embodiments enable computationally-intensive SSL processing to be performed on a network of edge devices to enable secure content to be retrieved over an already-established secure connection.

It will further be appreciated that at least those embodiments:-
- Offload SSL processing and reducing the load on a Web site's infrastructure to enable the site to perform better and at lower cost.
- Reduce the need for costly hardware and dedicated staff to operate a Web site.
- Enable Web sites that deliver secure content to instantly scale to meet enterprise growth and varying traffic needs.
- Provide secure content delivery as a highly secure, outsourced solution that addresses the performance and security needs of a Web site's SSL content while reducing costs and complexity.
- Support the reliable and secure delivery of SSL content to the end user from the edge of the Internet.

According to an illustrative embodiment, the technical advantages of the present invention are achieved by establishing a secure content delivery network. When a particular site wants to deliver entire SSL pages from the CDN, a domain associated with the site is aliased (e.g., by a DNS CNAME operation) over to the CDN. The CDN then serves SSL pages for the site over a secure connection on behalf of the site, preferably using a site- provided SSL certificate. Preferably, a customer's SSL certificate does not reside on any disk in the CDN edge server, In operation, once a secure session has been established, the CDN edge server retrieves secure content from the origin server over a secure connection and makes that content available to a requesting end user that has been mapped to that edge server. Secure content (i.e., pages) may be cached in some cases on the edge server; however, in some cases (but not necessarily all) it may be desirable to avoid putting certain secure content (e.g., content with private information for particular users) on disk. SSL objects and non-secure content may be cached on the edge server, thereby eliminating the need to retrieve such content to service another end user request for that content.

According to a technical advantage of the present invention, to ensure network and software security, preferably private information (e.g., SSL certificates) and uncacheable content does not reside on disk on any edge server in the secure content delivery network. Preferably, an edge server must pass a thorough audit before it can obtain keys to decrypt any private information, and decryption preferably occurs only in memory. Any server that is not accessible and thus cannot be audited preferably deletes any private information that it may hold in memory. Thus, when edge server machines are configured to operate on the secure CDN, preferably they keep content provider certificates intact only in memory and delete all content and certificates if disconnected in any way from the rest of the network.

The foregoing has outlined some of the more pertinent features of the present invention. These features should be construed to be merely illustrative. Many other beneficial results can be attained by applying the disclosed invention in a different manner or by modifying the invention as will be described.

### BRIEF DESCRIPTION OF THE DRAWINGS

Figure 1 is a block diagram of a known content delivery network in which the present invention may be implemented;
Figure 2 illustrates a typical machine configuration for a CDN content edge server;
Figure 3 illustrates how an end user is directed to an optimal edge server in order to make a request for secure content;
Figure 4 illustrates how the edge server in Figure 3 establishes a secure session with an origin server responsible for the secure content;
Figure 5 illustrates how the edge server in Figures 3-4 maintains a secure session and serves SSL content, including SSL pages, to the requesting end user;
Figure 6 illustrates a representative key management infrastructure that is used to facilitate secure content delivery according to the present invention;
Figure 7 illustrates how a key agent of the key management infrastructure facilitates key retrieval according to a preferred embodiment of the present invention; and
Figure 8 is an illustrative SSL region in the secure CDN according to the present invention.

### DETAILED DESCRIPTION OF THE PREFERRED EMBODIMENT

By way of background, it is known in the prior art to deliver digital content (e.g., HTTP content, streaming media and applications) using an Internet content delivery network (CDN). A CDN is a network of geographically-distributed content delivery nodes that are arranged for efficient delivery of content on behalf of third party content providers. Typically, a CDN is implemented as a combination of a content delivery infrastructure, a request-routing mechanism, and a distribution infrastructure. The content delivery infrastructure usually comprises a set of "surrogate" origin servers that are located at strategic locations (e.g., Internet network access points, Internet Points of Presence, and the like) for delivering content to requesting end users. The request-routing mechanism allocates servers in the content delivery infrastructure to requesting clients in a way that, for web content delivery, minimizes a given client's response time and, for streaming media delivery, provides for the highest quality. The distribution infrastructure consists of on-demand or push-based mechanisms that move content from the origin server to the surrogates. An effective CDN serves frequently-accessed content from a surrogate that is optimal for a given requesting client. In a typical CDN, a single service provider operates the request-routers, the surrogates, and the content distributors. In addition, that service provider establishes business relationships with content publishers and acts on behalf of their origin server sites to provide a distributed delivery system.

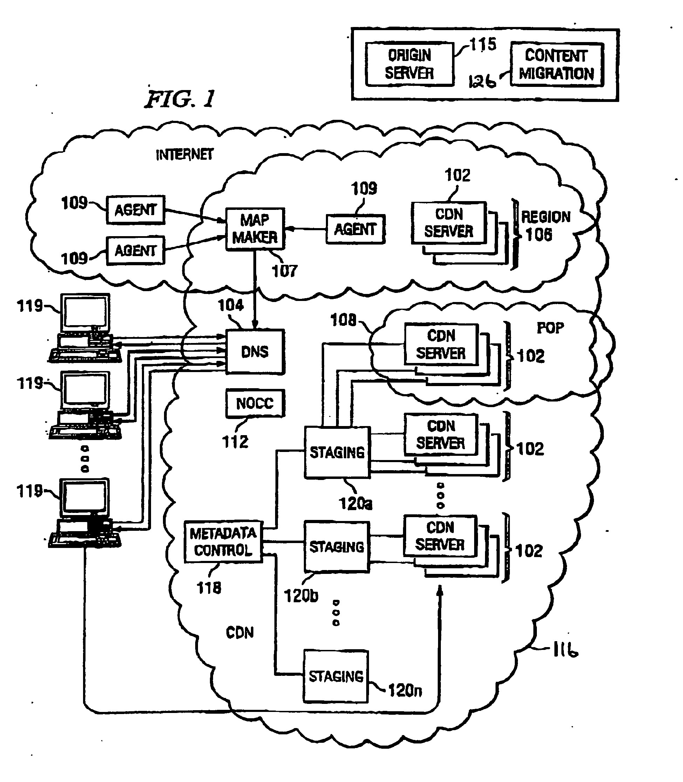

As seen in Figure 1, an Internet content delivery infrastructure usually comprises a set of "surrogate" origin servers 102 that are located at strategic locations (e.g., Internet network access points, and the like) for delivering copies of content to requesting end users 119. A surrogate origin server is defined, for example, in IETF Internet Draft titled "Requirements for Surrogates in the HTTP" dated August 9, 2000. The request-routing mechanism 104 allocates servers 102 in the content delivery infrastructure to requesting clients. The distribution infrastructure consists of on-demand or push-based mechanisms that move content from the origin server to the surrogates. A CDN service provider (CDNSP) may organize sets of surrogate origin servers as a group or so-called "region." In this type of arrangement, a CDN region 106 typically comprises a set of one or more content servers that share a common back-end network, e.g., a LAN, and that are located at or near an Internet access point. Thus, for example, a typical CDN region may be co-located within an Internet Service Provider (ISP) Point of Presence (PoP) 108. A representative CDN content server is a Pentium-based caching appliance running an operating system (e.g., Linux, Windows NT, Win2K) and having suitable RAM and disk storage for CDN applications and content delivery network content (e.g., HTTP content, streaming media and applications). Such content servers are sometimes referred to as "edge" servers as they are located at or near the so-called outer reach or "edge" of the Internet. The CDN typically also includes network agents 109 that monitor the network as well as the server loads. These network agents are typically co-located at third party data centers or other locations. Mapmaker software 107 receives data generated from the network agents and periodically creates maps that dynamically associate IP addresses (e.g., the IP addresses of client-side local name servers) with the CDN regions.

Content may be identmed for delivery from the CDN using a content migator or rewrite tool operated, for example, at a participating content provider server. Tool 26 rewrites embedded object URIs to point to the CDNSP domain. A request for such content is resolved through a CDNSP-managed DNS to identify a "best" region, and then to identify an edge server within the region that is not overloaded and that is likely to host the requested content. Instead of using content provider-side migration (e.g., using the tool 126, a participating content provider may simply direct the CDNSP to serve an entire domain (or subdomain) by a DNS directive (e.g., a CNAME). In either case, the CDNSP may provide object-specific metadata to the CDN content servers to determine how the CDN content servers will handle a request for an object being served by the CDN. Metadata, as used herein, refers to a set of control options and parameters for the object (e.g., coherence information, origin server identity information, load balancing information, customer code, other control codes, etc.), and such information may be provided to the CDN content servers via a configuration file, in HTTP headers, or in other ways. The Uniform Resource Locator (URL) of an object that is served from the CDN in this manner does not need to be modified by the content provider. When a request for the object is made, for example, by having an end user navigate to a site and select the URL, a customer's DNS system directs the name query (for whatever domain is in the URL) to the CDNSP DNS request routing mechanism. A representative CDN DNS request routing mechanism is described, for example, in U.S. Patent No. 6,108,703. Once an edge server is identified, the browser passes the object request to the server, which applies the metadata supplied from a configuration file or HTTP response headers to determine how the object will be handled.

As also seen in Figure 1, the CDNSP may operate a metadata transmission system 116 comprising a set of one or more servers to enable metadata to be provided to the CDNSP content servers. The system 116 may comprise at least one control server 118, and one or more staging servers 120a-n, each of which is typically an HTTP server (e.g., Apache). Metadata is provided to the control server 118 by the CDNSP or the content provider (e.g., using a secure extranet application) and periodically delivered to the staging servers 120a-n. The staging servers deliver the metadata to the CDN content servers as necessary.

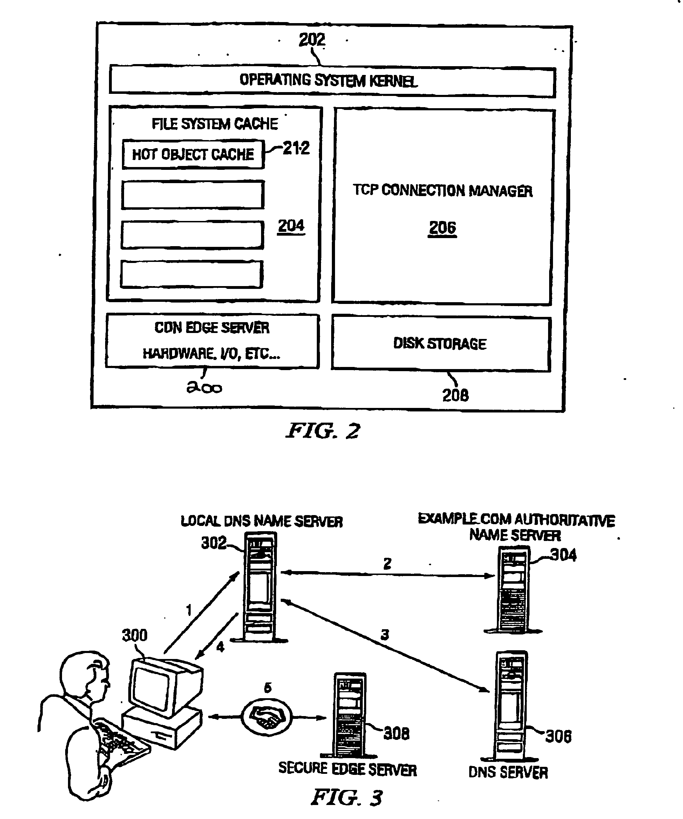

The above described content delivery network is merely illustrative. The present invention may leverage any content delivery infrastructure in which a service provider operates any type of DNS-based request routing mechanism. Figure 2 illustrates a typical machine configuration for a CDN content edge server. Typically, the content server 200 is a caching appliance running an operating system kernel 202, a file system cache 204, CDN software 206, TCP connection manager 208, and disk storage 210. CDN software 206, and creates and manages a "hot" object cache 212 for popular objects being served by the CDN. It may also provide other CDB-related functions, such as request routing, in region load balancing, and the like. In operation as an HTTP cache for example, the content server 200 receives end user requests for content, determines whether the requested object is present in the hot object cache or the disk storage, serves the requested object via HTTP (if it is present) or establishes a connection to another content server or an origin server to attempt to retrieve the requested object upon a cache miss.

In an illustrative embodiment, the CDN service provider establishes a subset of its network as an optimized delivery solution for secure content, which includes full page SSL content and SSL certificates. This dedicated network is sometimes referred to herein as a secure content delivery network, or a secure CDN. Preferably, the secure CDN has a high level of physical, network, software and procedural security. When machines are configured to operate on the secure CDN, preferably they keep certificates intact only within system memory (e.g., RAM), and they delete all content and certificates if disconnected in any way from the rest of the network. Edge servers for the secure CDN are preferably located in racks in secure cages or cabinets with access controls and active monitoring. Generally, facilities should meet certain security criteria, such as strict physical access controls, together with active surveillance systems, such as motion detection systems, image capture systems and video cameras inside and/or outside the cage.

The present invention describes a method of secure content delivery of SSL content. Preferably, the method is carried out by a content delivery network service provider (CDNSP), which directly or indirectly operates a secure CDN. The secure CDN may be a dedicated network or a subset of a larger distributed network that is managed by the service provider. A Web site obtains secure content delivery, preferably as a managed service, by aliasing the site (or given domains or subdomains) to the CDN. A preferred technique for aliasing all or substantially all of the site is through use of a DNS canonical name (CNAME). When this technique is used, the site should disable recursion on its authoritative name servers and communicate any content control requirements to the CDN service provider. By CNAMing the site to the secure CDN, the CDN service provider serves SSL pages over a secure connection on the site's behalf, preferably using an SSL certificate provided by the site. SSL page objects and non-secure content can be cached on the edge server in the usual manner, eliminating the need to retrieve content for each client request.

By way of additional background, SSL uses a public/private key pair encryption system. The SSL certificate is a document that contains an RSA public key for a given server. This certificate can be passed out to any browser that asks for it. The private key is closely held by the certificate purchaser or an assignee, which, in this case, is the CDN service provider who desires to use the secure CDN. The public key allows clients to decrypt information from the server that was encrypted for the public key and to encrypt data to be sent to the server. At the server, the private key provides the unique ability to decrypt the data from the client. To be used effectively, an SSL certificate needs to be digitally signed by a certificate authority, and numerous such authorities exist. Generally, a site makes a request and obtains the certificate and its key pairs, and then it requests a digital signature from the certificate authority. There is no need to encrypt the certificate, because the certificate typically only contains a public key, which may be given to any browser that asks for it. Private keys, however, should always remain protected, e.g., by a pass phrase, a PGP key, or a Rijndael key. In other words, private keys should always be encrypted and, as will be seen, preferably they should not be stored on disk in an unencrypted form.

A content provider provides the CDN service provider with an SSL certificate, and a private key pair, as described above, for each site or domain that is to be served over the secure CDN. Each certificate preferably contains a public key, which has a private key associated therewith. The matching private key is required by the server to authenticate itself to the requesting client. As described above, while the public key is passed out to browsers that request it, the private key is always encrypted and closely held, and it is kept secure by the CDN service provider. The way in which the CDN does this is described below in the discussion of a key management infrastructure (KMI). In addition, preferably the content provider separates its secure content by domain from its non-secure content. This is not required, but it improves performance for non-secure content. As will be described below, both secure and non-secure content can be transferred using the secure CDN. All origin requests made on behalf of a particular client request are done securely if the client request is secure. If the client request is not secure, the origin requests typically are not either. For Caching purposes, objects requested under SSL preferably are treated as separate object from other requests, even if the object is in fact the same object on the origin.

With the above as background, Figures 3-5 and the accompanying text illustrate and describe a method of secure content delivery according to the present invention. Figure 3 first illustrates how a user is directed to an optimal edge server. The reference numerals in these figures correspond to the steps that are described below. At step (1), when the user enters the site, he or she enters the site's name, e.g., www.example.com, into a browser address panel (or selects a link to the site's home page. The browser, which is a client 300, then does a DNS (domain name system) lookup on its local name server 302. At step (2), the local name server asks the authoritative name server for www.example.com for an IP address. The authoritative name server 304 responds to the local name server 302, pointing it (via the CNAME) to a CDN network address. At step (3), the local name server then contacts the CDN's DNS 306, which responds with IP address of an optimal machine, i.e., a secure edge server 308 that is optimal for the end user in terms of physical location and availability, on the secure CDN. At step (4), the local name server tells the browser the address of the optimal secure edge server. As part of the setup for the service offering, it is assumed that the site has provided the CDN service provider with an SSL certificate for the site's common name, in this case, www.example.com. The common name is one of the pieces of data specified in the SSL certificate. At step (5), after getting the edge server address from its local name server, the browser sends its request to the edge server. The secure CDN checks that the request matches the common name requested. It then engages in an SSL/TLS (Transport Layer Security) handshake with the browser, presenting the browser with the SSL certificate.

More specifically, a TCP connection is first established between the client and the edge server. Then, an SSL session (SSL/TLS handshake) is established, generally as follows. The client sends a "client hello" message. The server responds with the certificate and information that can be generated only if the server has the appropriate private key matching the public key in the certificate. The client then authenticates the server by checking that the information can be decrypted with the public key and checking that the hostname in the certificate is correct. As part of this exchange, the client and the server establish a shared (secret) key to use for encrypting the rest of the data to be exchanged in the session. Then, the client sends the HTTP request (encrypted as part of the SSL session). Thus, the edge server does not get the HTTP request until it has already returned the certificate, and it does not know what hostname is in the request when it returns the certificate. The client checks (before actually sending the HTTP request) that the certificate is for the right hostname.

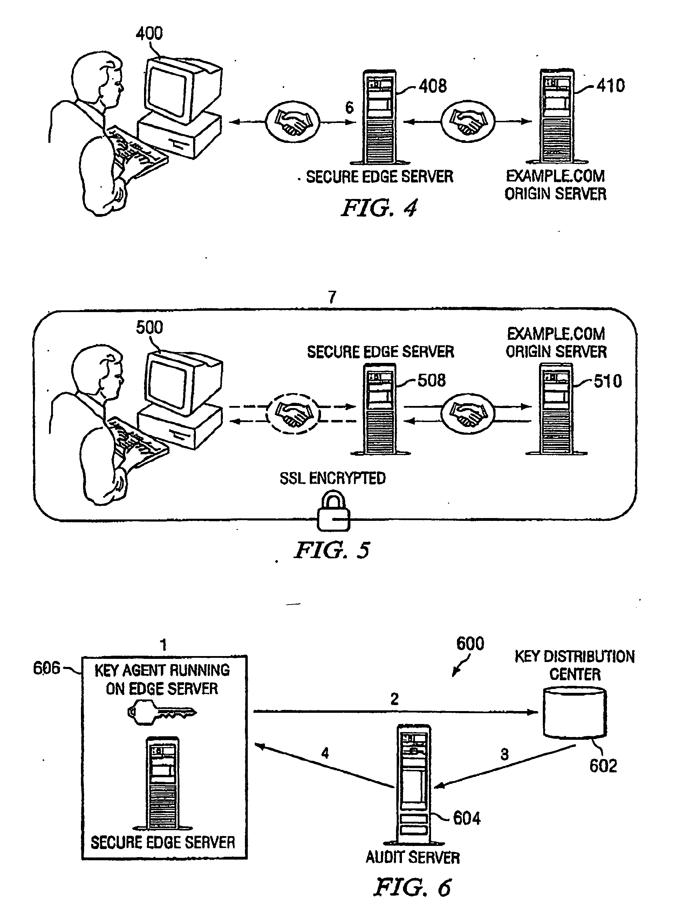

Figure 4 illustrates how the secure edge server 408 establishes a secure origin session. This is step (6). While maintaining the session with the browser, the secure edge server connects to the site's origin server 410, preferably using a URL specified in the browser request. Alternatively, the connection is made to an address that the site has set in a configuration file available to the edge server. In the ensuing SSL handshake, the origin site presents a server certificate to the secure edge server. In this certificate, the common name (www.example.com) can be the same as the common name in the certificate that the CDN service provider provides to the client 400, but an organizational name (e.g., Example, Inc.), which is a data element specified in the certificate, must be different. Optionally, the site may require that the edge server present a certificate to the origin for verification and acceptance. If the handshake is successful, the connection opens and the client's request is sent over HTTPS to the origin. The edge-origin connection preferably is optimized through the use of persistent SSL/TLS and TCP parameter settings. The various headers sent with the request are either those specified with the request, or they can be as specified in a configuration file. Typically, the end user's IP address is specified in the X-Forwarded-For HTTP header.

Figure 5 illustrates how the secure edge server 508 maintains the secure session and serves content, e.g., an entire page, or some portion thereof such as the embedded page objects, to the requesting end user. This is step (7). Having established sessions with both the client browser 500 and the origin server 510, the secure edge server 508 can forward requests to the origin, fetch content from the origin to deliver to the end user, and/or deliver content from its own cache as required. For example, the first page served to the end user could be a login page, which may be a form that is already cached at the edge. Using this connection, the end user can request and obtain an entire SSL page, including the HTML and embedded page objects referenced by that markup. In addition, once the end-to-end connection is established, the requesting end user can obtain SSL pages and SSL objects, as well as non-secure content, from the secure CDN.

To facilitate secure content delivery, the CDN service provider preferably operates a key management infrastructure, which is a distributed, secure database built to allow trusted interactions involving sensitive and secure information. The key management infrastructure is used to enable edge servers to become authorized to handle SSL certificates on behalf of Web site customers. Such information includes, for example, secrets or decryption keys for SSL certificates, identity verification methods for servers attempting access to the database, and data such as IP addresses, As illustrated in Figure 6, the key management infrastructure (KMI) 600 comprises three (3) basic components: a key distribution center (KDC) 602, audit servers 604, and key agents 606. The KDC is a set of machines located in distributed, secure environments that together maintain a secure database. KMI preferably maintains a database of all edge servers in the secure CDN, as well as a database of the processes running on these machines. If a machine goes down, it is removed from the database. The audit servers are a set of machines in secure environments whose function it is to run audits on edge servers. If the edge server passes the audit, the audit server responds by giving it the data or secret it had requested. The key agents are applications that manage interactions involving certificate keys. For example, and as will be described below, a key agent mediates the audit process. Key agents preferably run on all servers in the system, including edge servers in the secure CDN. The key agents preferably never given encryption keys to other applications, nor do they write the keys to disk. Alternatively, the keys can be written to disk, but only in encrypted form. The "root" keys that are used to decrypt the certificates and the private keys for the CDN customers are never written to disk, however. Similarly, the root keys are not given to other CDN applications, but the certificates and private keys for the CDN customers are provided to the application that manage the secure edge server so that it can receive packets with that virtual IP address (VIP) as a destination, and then has the VIP itself in the packet to use to decide which the associated customer hostname.

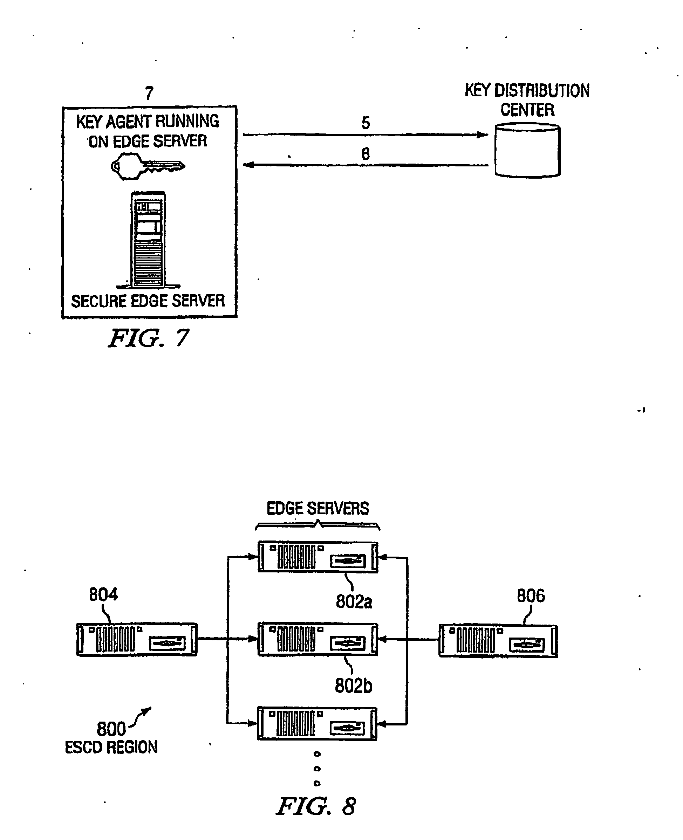

As illustrated in Figure 6, when a secure edge server comes on line (step (1)), preferably it already has a certain amount of configuration data received from the service provider. Thus, for example, the server likely "knows" how to proceed to become active as a secure server, but it cannot do so without being able to access the SSL certificate keys. According to a preferred embodiment, the edge server cannot get the keys except through first passing an external audit. In other words, an edge server preferably must be authenticated (by an audit server) before it can become part of the secure CDN and deliver secure content. To this end, the edge server makes a request of its key agent to retrieve keys from the KDC. At step (2), the key agent running on the edge server requests keys from the KDC for the edge server. At step (3), the KDC generates a verification secret for this specific machine and hands that secret to the audit server. The purpose of this verification secret is to allow the key agent to authenticate itself in step (5), as illustrated in Figure 7. As step (4) (in Figure 6), the audit server selects a random set of audits from its database and runs the audit against the edge server via the edge server's key agent. The audit preferably performs a number of checks to determine whether the edge server can be safely configured into the secure CDN. If the edge server passes the audit, the audit server gives the local key agent the verification secret.

The audit server thus provides a new edge server bootstrapping function. It checks the legitimacy of a machine claiming to be a new edge server before giving it an private key/certificate pair. Preferably, a given audit server has a random database of audits (e.g., checksumming files, low-level hardware tests, and the like) that can be selected and executed against a given edge server seeking to be authenticated into the secure CDN. When prompted by the KDC, the audit server connects to the candidate edge server, selects one or more audits, and runs them.

The key agent is typically implemented as a software module that resides on the edge server. As described above, the key agent keeps track of keys that belong to the machine.

Figure 7 illustrates how the key agent facilitates key retrieval. At step (5), the key agent verifies itself to the KDC, and to this end it sets up an encrypted channel between itself and the KDC. At step (6), the KDC gives the edge server the ability to decrypt the keys as well as information about which versions of which applications should be running on the edge server. This information is necessary to access the keys. At step (7), the key agent on the edge server now has SSL certificate keys and the ability to decrypt them. It also knows which applications can access the certificates and, optionally, checksums (e.g., message digests) of those applications. Preferably, none of this information is written to disk; rather, all of this information is held only in the edge server memory. When an application executing on the edge server requests an SSL certificate, the key agent verifies the application's checksum. If the application passes, the key agent decrypts the certificate and gives it to that application. Preferably, the key agent never gives the private keys to the application and uses a TCP socket on loopback as the local application connection.

The present invention provides the reliable and secure delivery of SSL content using a CDN customer-provided SSL certificate. Preferably, the certificate is kept on disk in a single highly secure location, such as the KDC, however, preferably the certificate does not reside on disk anywhere else. A copy of the customer's SSL certificate must reside on the secure edge servers to allow them to serve SSL content on the customer's behalf. However, the key agent running on the edge server ensures that the copy of the certificate only resides in memory and not on disk. Further, a server that cannot be fully monitored by the CDN service provider will remove the certificate from its memory and no longer serve the SSL traffic.

Secure content (i.e., pages) may be cached in some cases on the edge server; however, in some cases (but not necessarily all) it may be desirable to avoid putting certain secure content (e.g., content with private information for particular users) on disk. In general, certificates (and, in particular, the private keys associated with certificates) need to be deleted (at least in non-encrypted form) when the edge server is not connected to the network. Content, however, need not be. Some content might need to be deleted from the cache if it has private user data in it. Most content, however, even if delivered over SSL, does not have this issue. Of course, whether or not particular content needs to be removed from cache (e.g., when a a network connection is lost) depends on the particular application. In financial applications, for example, many pages will have private account information while in retail applications the user might submit private information to the origin server, but the pages themselves might be served back without the private information.

As noted above, for optimal performance and scalability, preferably customers separate their non-SSL content from their SSL content. This is most easily accomplished by having SSL content reside on a different domain from that of the non-SSL content. In such case, the SSL content is served from the ESCD network while the non-SSL content is served from the standard CDN edge servers.

Secure content delivery enables Web sites with secure content to take full advantage of the increased performance, reliability, and scalability benefits of the CDN managed service across the entire site while specifically addressing cost and complexity issues that are inherent in SSL Web site infrastructure. Preferably, the secure CDN comprises servers deployed in data centers and on networks that meet strict security requirements. Edge servers are not authorized to access and use SSL certificates and thus to serve content over the secure CDN until they have been first authenticated, preferably by passing an audit. The dedicated network provides significant advantages in that SSL objects and cacheable content are delivered from servers closer to the end user, thereby avoiding Internet congestion, computation-intensive SSL handshake is faster when performed at the edge (i.e., shorter Internet distance reduces latency), and secure content is retrieved over an already-established secure connection between edge server and origin server, thereby reducing the SSL handshake overhead. Offloading computation-intensive SSL processing significantly reduces the load on a Web site's infrastructure, enabling the site to handle more users. The Web site's infrastructure need only handle connections from the CDN edge servers, not from all end users.

The present invention provides numerous advantages. Generally, the invention enables a service provider to deliver both SSL objects and SSL pages from the edge of the Internet. Delivering only SSL objects from the edge can improve performance of SSL objects, but it does not address the performance and scalability issues inherent in the computation-intensive SSL processing required for all SSL transactions. The invention enables the Web site provider to avoid having to build out a massive global secure infrastructure, which is costly, time-consuming, and requires additional hardware (including SSL accelerators) and resources.

Preferably, the secure CDN is provisioned as follows. The secure CDN comprises a set of one or more regions, with each region 800 (as illustrated in Figure 8) being a collection of edge servers 802a-n that share a front-end switch 804 and a back-end switch 806. Front-end switch 804 preferably operates as a Layer-4 switch; back-end switch 806 preferably operates as a Layer-2 switch. The back-end network is preferably a local area network operating on an Ethernet or the like. Each server comprises commodity hardware, an operating system (e.g., Linux, W2K, or the like), and a set of applications. Figure 2 illustrated a typical configuration. Thus, preferably the CDN service provider dedicates a set of one or more region(s) to serving SSL content. These regions comprise part of a preferably separate edge secure content delivery (ESCD) network (that may or may not be part of the rest of the CDN used, for example, for whole site or object delivery). Preferably, the CDN service provider then assigns each SSL customer hostname its own IP address in each SSL region and arranges for the CDN mapping to direct traffic for a given hostname to the IP addresses assigned to it. Preferably, the front-end switch 804 is operated as a layer-4 switch in front of each SSL region. The switch (which may be layer-4 or layer-7 hardware) exports a number of virtual IP addresses (one per SSL customer hostname). Preferably, each VIP is mapped to a unique port on the physical machines behind the switch. When an application executing on a given edge server receives a connection on a port, it knows from the port number which SSL hostname is involved in the request, and it can then choose the right certificate to return based on that designation.

Thus, preferably an SSL region has a set of edge server machines that are each authenticated into the region by an audit server. A layer-4 (or layer-7) switch sits in front of these edge servers. The back-end switch is a standard switch. Preferably, the region has a set of virtual IP addresses exported by the front-end switch, and these VIPs are used for SSL traffic. The switch terminates TCP connections, but not SSL connections. Each edge server may also have a physical IP address used for direct connections to the server (e.g., for provisioning) so that traffic to these IP addresses is passed through untouched by the switch.

As described above, assume a customer wants to serve SSL traffic on some hostname, such as www.foo.com. To this end, foo.com is CNAMEd to some a CDN-provisioned name, say www.foo.com.cdn.net. When a browser makes a request for this name, the CDN request routing mechanism translates www.foo.com to a virtual IP address in an optimal SSL region. The front-end switch in that region translates the VIP for www.foo.com.cdn.net to a port number on an optimal edge server in the SSL region. The edge server application then uses the port number to find the certificate for foo.com to enable the edge server to establish and maintain the secure session for delivery of full page SSL content.

As described above, preferably each ESCD customer has a unique SSL certificate/key pair. An edge server application needs these certificates (and, more importantly, private keys) to serve SSL traffic. This information should not be on disk unencrypted, even in binary. Preferably, such information is transmitted encrypted to the application via the metadata transport system. The key agent handles the decryption and management of the private keys on the edge server.

Representative machines on which the present invention is operated may be Intel Pentium-based computers running a Linux or Linux-variant operating system and one or more applications to carry out the described functionality. One or more of the processes described above are implemented as computer programs, namely, as a set of computer instructions, for performing the functionality described.

While the present invention has been described in the context of the Secure Sockets Layer (SSL), this is not a limitation of the present invention. The techniques described herein may be used with any other protocol including, without limitation, Transport Layer Security (TLS).

## Claims

1. A method for secure content delivery, comprising the unordered steps of:
authenticating a given edge server (408) into a content delivery network to enable the given edge server (408) to provide secure content delivery;
directing an end user browser (400) to the given edge server (408);
establishing a secure session among the end user browser, the given edge server and an origin server (410) at which given content is hosted; and
maintaining the secure session as the given edge server (408) obtains content from the origin server (410) and delivers that content to the end user browser (400);
wherein the content is selected from a set of content that Includes secure page content, and embedded objects for the secure page content, **characterised in that**; the step of authenticating the given edge server comprises:
generating a verification secret for the given edge server (408) in a key distribution center (602) and sending said verification secret from the key distribution center (602) to an audit server (604);
initiating at least one audit selected by the audit server (604) at the given edge server (408) to determine whether the given edge server (408) can be securely configured into the content delivery network;
if the given edge server (408) passes the audit, delivering the verification secret from the audit server (604) to the given edge server (408) to enable the given edge server (408) to acquire given information for use in providing the secure content delivery.

2. The method as described in Claim 1 wherein the given information includes an SSL certificate.

3. The method as described in Claim 1 wherein the given information includes a private key associated with an SSL certificate.

4. The method as described in Claim 2 wherein the SSL certificate resides only in memory on the given edge server (408).

5. The method as described in Claim 1 wherein the at least one audit performs a file checksum.

6. The method as described in Claim 1 wherein the at least one audit performs a hardware test.

## Patentansprüche

1. Verfahren zur gesicherten Inhaltsauslieferung, folgende ungeordnete Schritte umfassend:
- Authentifizieren eines gegebenen Kantenservers (408) in ein Netzwerk zur Inhaltsauslieferung, um es dem gegebenen Kantenserver (408) zu ermöglichen, gesicherte Inhaltsauslieferung bereitzustellen;
- Führen eines Browsers (400) eines Endanwenders an den gegebenen Kantenserver (408);
- Errichten einer gesicherten Sitzung zwischen dem Browser des Endanwenders, dem gegebenen Kantenserver und einem Quellrechner (410), bei dem gegebene Inhalte vorgehalten sind; und
- Aufrechterhalten der gesicherten Sitzung während der gegebene Kantenserver (408) Inhalte vom Quellrechner (410) erhält und diese Inhalte an den Browser (400) des Endanwenders ausliefert;
wobei die Inhalte aus einem Satz von Inhalten ausgewählt sind, welcher gesicherte Seiteninhalte und eingebettete Objekte für die gesicherten Seiteninhalte beinhaltet, **dadurch gekennzeichnet, dass**:
der Schritt des Authentifizierens des gegebenen Kantenservers Folgendes umfasst:
- Generieren eines Verifizierungsgeheimnisses für den gegebenen Kantenserver (408) in einem Schlüsselverteilungszentrum (602) und Versenden des Verifizierungsgeheimnisses vom Schlüsselverteilungszentrum (602) an einen Überprüfungsserver (604);
- Veranlassen wenigstens einer vom Überprüfungsserver (604) ausgewählten Überprüfung bei dem gegebenen Kantenserver (408), um festzustellen, ob der gegebene Kantenserver (408) sicher in das Netzwerk zur Inhaltsauslieferung konfiguriert werden kann;
- falls der gegebene Kantenserver (408) die Überprüfung besteht, Ausliefern des Verifizierungsgeheimnisses vom Überprüfungsserver (604) an den gegebenen Kantenserver (408), um es dem gegebenen Kantenserver (408) zu ermöglichen, gegebene Informationen zur Verwendung bei der Bereitstellung der gesicherten Inhaltsauslieferung abzurufen.

2. Verfahren gemäß Anspruch 1, wobei die bestimmte Information ein SSL-Zertifikat beinhaltet.

3. Verfahren gemäß Anspruch 1, wobei die bestimmte Information einen mit einem SSL-Zertifikat verknüpften privaten Schlüssel umfasst.

4. Verfahren gemäß Anspruch 2, wobei das SSL-Zertifikat auf dem gegebenen Kantenserver (408) ausschließlich im Arbeitsspeicher gehalten wird.

5. Verfahren gemäß Anspruch 1, wobei die wenigstens eine Überprüfung eine Prüfsumme über eine Datei durchführt.

6. Verfahren gemäß Anspruch 1, wobei die wenigstens eine Überprüfung einen Hardware-Test durchführt.

## Revendications

1. Procédé pour la distribution de contenu sécurisé, comprenant les étapes non ordonnées consistant à :
authentifier un serveur marginal donné (408) dans un réseau de distribution de contenus pour autoriser le serveur marginal donné (408) à fournir une distribution de contenu sécurisé ;
diriger un navigateur d'utilisateur final (400) vers le serveur marginal donné (408) ;
établir une session sécurisée entre le navigateur d'utilisateur final, le serveur marginal donné et un serveur d'origine (410) au niveau duquel un contenu donné est accueilli ; et
maintenir la session sécurisée lorsque le serveur marginal donné (408) obtient un contenu provenant du serveur d'origine (410) et délivre ce contenu au navigateur d'utilisateur final (400) ;
dans lequel le contenu est sélectionné à partir d'un groupe de contenus qui comprend un contenu de page sécurisé et des objets imbriqués pour ce contenu de page sécurisé, **caractérisé en ce que** l'étape d'authentification du serveur marginal donné consiste à :
générer un secret de vérification pour le serveur marginal donné (408) dans un centre de distribution de clés (602) et transmettre ledit secret de vérification du centre de distribution de clés (602) à un serveur d'audit (604) ;
lancer au moins un audit sélectionné par le serveur d'audit (604) au serveur marginal donné (408) pour déterminer si le serveur marginal donné (408) peut être configuré de manière sécurisée dans le réseau de distribution de contenus ;
si le serveur marginal donné (408) passe l'audit, délivrer le secret de vérification du serveur d'audit (604) au serveur marginal donné (408) pour autoriser le serveur marginal donné (408) à acquérir des informations données à utiliser pour fournir la distribution de contenu sécurisé.

2. Procédé selon la revendication 1 dans lequel les informations données comprennent un certificat SSL.

3. Procédé selon la revendication 1 dans lequel les informations données comprennent une clé privée associée à un certificat SSL.

4. Procédé selon la revendication 2 dans lequel le certificat SSL réside seulement en mémoire sur le serveur marginal donné (408).

5. Procédé selon la revendication 1 dans lequel l'au moins un audit effectue un total de contrôle de fichiers.

6. Procédé selon la revendication 1 dans lequel l'au moins un audit effectue un test de matériel.
